Europäisches Patentamt

European Patent Office

Office européen des brevets

(11) Numéro de publication : **0 107 537 B2**

(12) # NOUVEAU FASCICULE DE BREVET EUROPEEN

(45) Date de publication du nouveau fascicule du brevet : **21.10.92 Bulletin 92/43**

(51) Int. Cl.⁵ : **E05F 15/16, H02P 7/00**

(21) Numéro de dépôt : **83401840.0**

(22) Date de dépôt : **20.09.83**

(54) **Circuit de commande du moteur d'entraînement d'un panneau ouvrant d'un véhicule automobile.**

(30) Priorité : **12.10.82 FR 8217079**

(43) Date de publication de la demande :
**02.05.84 Bulletin 84/18**

(45) Mention de la délivrance du brevet :
**15.01.86 Bulletin 86/03**

(45) Mention de la décision concernant
l'opposition :
**21.10.92 Bulletin 92/43**

(84) Etats contractants désignés :
**DE GB IT SE**

(56) Documents cités :
**EP-A- 0 057 338
DE-A- 2 926 938**

(56) Documents cités :
**FR-A- 2 339 271
GB-A- 2 026 723
GB-A- 2 053 513
US-A- 3 675 101**

(73) Titulaire : **ECIA - EQUIPEMENTS ET
COMPOSANTS POUR L'INDUSTRIE
AUTOMOBILE
F-25400 Audincourt (Doubs) (FR)**

(72) Inventeur : **Rudi, Alain
2 Rue Collin Essert
F-90000 Belfort (FR)**
Inventeur : **Petrequin, Claude
Rue Hector Berlioz
F-25700 Valentigney (FR)**

(74) Mandataire : **Polus, Camille et al
c/o Cabinet Lavoix 2, Place d'Estienne d'Orves
F-75441 Paris Cedex 09 (FR)**

## Description

La présente invention est relative à un circuit de commande pour un moteur d'actionnement de panneau coulissant pour véhicules automobiles.

Ces circuits sont utilisés notamment pour assurer la commande automatique des vitres ou du toit ouvrant de tels véhicules.

On connaît déjà des circuits de comande de ce type comprenant des moyens permettant d'alimenter le moteur dans les deux sens de marche à l'aide d'un sélecteur à deux sections affectées repectivement à ces deux sens, des moyens générateurs d'un signal représentant en fin de course de fermeture du panneau, l'engagement de celui-ci dans un joint d'étanchéité, et des moyens qui en réponse à ce signal sont capables d'arrêter le fonctionnement du moteur dans le sens de la fermeture (voir FR-A-2 330 272 ou EP-A-57338).

A l'heure actuelle, afin d'améliorer l'étanchéité notamment des portières des véhicules, on a tendance à augmenter les dimensions des joints d'étanchéité des vitres et il s'est avéré qu'un lève-vitre équipé d'un circuit de commande du type indiqué ci-dessus n'est pas toujours en mesure de commander le moteur d'entrainement du panneau pendant un temps suffisamment long après la détection de l'engagement dans le joint de la vitre, pour que la fermeture totale soit obtenue. En d'autres termes, les moyens qui doivent arrêter le fonctionnement du moteur réagissent trop rapidement et ce défaut se fait de plus en plus sentir avec le vieillissement du véhicule en raison de la diminution progressive de la qualité du joint.

D'après DE-A-2 926 938, on connaît un circuit de commande du moteur d'entraînement d'un panneau ouvrant de véhicule automobile tel qu'une vitre permettant d'alimenter le moteur dans les deux sens de marche à l'aide d'un sélecteur à deux sections affectées respectivement à ces deux sens. Des moyens générateurs d'un signal représentant, en fin de course, l'engagement de fermeture du panneau dans la structure de réception de celui-ci sont prévus, ces moyens comportant. un détecteur du courant circulant dans le moteur.

Le circuit de commande comporte également des moyens de commutation qui, en réponse au signal fourni par le détecteur de courant, sont capables d'arrêter le fonctionnement du moteur dans le sens de la fermeture en coupant l'alimentation du moteur. Le circuit de commande comporte en outre des moyens qui, à la suite de l'apparition dudit signal, assurent l'alimentation du moteur dans ce même sens pendant une brève période de temps prédéterminée, lesdits moyens assurant le maintien de l'alimentation du moteur comprenant un temporisateur dont la période de temps est déclenchée dès que le panneau atteint la position dans laquelle il commence à pénétrer dans la structure de réception du panneau en fin de course de fermeture de manière à maintenir le moteur alimenté pendant une brève période de temps prédéterminée malgré la présence du signal provenant desdits moyens générateurs du signal d'engagement du panneau dans la structure de réception en fin de course de fermeture pendant ladite période de temps.

L'invention a pour but de fournir un circuit de commande qui permette d'obtenir une étanchéité parfaite à la fermeture même si les joints ont des dimensions importantes et si, par ailleurs, en raison du vieillissement, la qualité de ces joints diminue. Elle vise en outre à fournir un circuit qui présente une souplesse accrue et une sécurité améliorée par rapport aux dispositifs connus de ce type.

L'invention a donc pour objet un circuit de commande du moteur d'entraînement d'un panneau ouvrant de véhicule automobile, tel qu'une vitre ou le toit ouvrant comprenant des moyens permettant d'alimenter le moteur dans les deux sens de marche à l'aide d'un sélecteur à deux sections affectées respectivement à ces deux sens, des moyens générateurs d'un signal représentant en fin de course de fermeture du panneau, l'engagement de celui-ci dans un joint d'étanchéité, des moyens de commutation qui en réponse à ce signal sont capables d'arrêter le fonctionnement du moteur dans le sens de la fermeture, et des moyens qui, à la suite de l'apparition dudit signal, assurent l'alimentation du moteur dans ce même sens pendant une brève période de temps prédéterminée, lesdits moyens assurant le maintien de l'alimentation du moteur comprenant un circuit temporisateur dont la période de temps est déclenchée dès que le panneau atteint la position dans laquelle il commence à pénétrer dans le joint, de manière à maintenir le moteur alimenté pendant ladite période de temps malgré la présence du signal provenant desdits moyens générateurs du signal d'engagement du panneau dans le joint, caractérisé en ce que la période de temps est déclenchée par un organe de commutation mécanique, dès que le panneau atteint la position dans laquelle il commence à pénétrer dans le joint, en ce que les moyens qui à la suite de l'apparition du signal d'engagement du panneau dans le joint d'étanchéité, inhibent les moyens d'arrêt du moteur comprennent un commutateur actionné par le panneau et connecté d'une part à un condensateur du circuit temporisateur, normalement chargé lorsque le moteur est alimenté et d'autre part, à un transistor du circuit temporisateur, le transistor assurant la commande sous l'action de la décharge du condensateur de l'alimentation d'une bobine de relais qui fait partie des moyens de commutation et par conséquent de l'alimentation du moteur d'entraînement, et en ce que le circuit comporte de plus des moyens d'inhibition desdits moyens d'arrêt lors d'une action prolongée du sélecteur exercée volontairement pour provoquer le déplacement du panneau ouvrant entre les positions extrêmes de celui-ci.

Grâce au fait que l'action d'entraînement du moteur sur le panneau est poursuivie pendant un certain temps prédéterminé après le fonctionnement des moyens d'arrêt, on obtient une fermeture toujours suffisante du panneau même après une période d'utilisation prolongée du véhicule.

Grâce au fait que l'action d'entraînement du moteur sur le panneau est poursuivie pendant un certain temps prédéterminé après le fonctionnement des moyens d'arrêt, on obtient une fermeture toujours suffisante du panneau même après une période d'utilisation prolongée du véhicule.

D'autres caractéristiques de l'invention sont indiquées dans les revendications dépendantes.

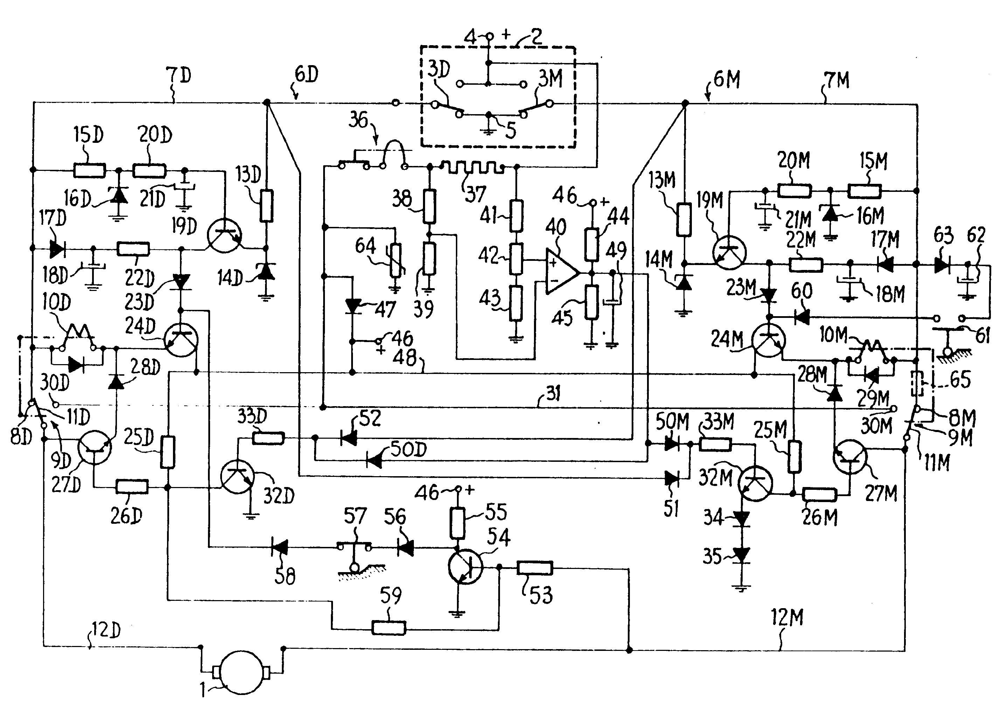

L'invention sera expliquée au cours de la description qui va suivre, donnée uniquement à titre d'exemple et faite en référence au dessin annexé, sur lequel :

- la Fig. unique est un schéma d'un exemple de circuit de commande pour moteur d'entraînement d'un panneau ouvrant de véhicule automobile suivant l'invention.

En se référant à cette figure, on voit représenté un moteur électrique 1 qui par un mécanisme non représenté et connu est capable d'entraîner un panneau de véhicule automobile, tel que par exemple, la vitre ou le toit ouvrant. Ce moteur qui est à courant continu peut être commandé dans les deux sens. Dans l'exemple décrit ici, on suppose qu'il s'agit d'une vitre et que le circuit de commande appartient donc à un lève-vitre pouvant provoquer la descente et la montée de cette vitre.

Le circuit comprend un sélecteur 2 comportant un inverseur de montée 3M et un inverseur de descente 3D, les contacts fixes de ces inverseurs étant respectivement reliés ensemble par paires, l'une des paires étant reliée à la tension positive d'une source d'alimentation par une borne 4 et l'autre paire étant reliée à la masse au point 5. Les inverseurs 3M et 3D sont reliés respectivement à une section de montée 6M et une section de descente 6D du circuit de commande.

On va maintenant décrire la section 6M étant entendu que la section de descente 6D comporte d'une façon générale les mêmes composants agencés de la même façon et désignés par les mêmes références numériques affectées de la lettre D au lieu de la lettre M.

Cependant, dans la suite de la description, les références numériques dépourvues du suffixe M ou D sont supposées être des organes communs aux sections 6M et 6D ou des organes indépendants.

Le contact mobile 3M est relié à une ligne d'alimentation 7M qui aboutit à l'un des contacts fixes ou contact de repos 8M d'un relais 9M qui est commandé par une bobine de relais 10M. Le contact mobile 11M du relais 9M est relié à une ligne 12M qui le connecte à l'une des bornes du moteur 1.

La ligne 7M est connectée :

a) à une résistance 13M qui est reliée à travers une diode Zener 14M à la masse;

b) à une résistance 15M qui est reliée à la masse par une diode Zener 16M;

c) à une diode 17M qui est connectée à la masse par l'intermédiaire d'un condensateur 18M; et

d) à la bobine 10M du relais 9M.

Le point de jonction entre la résistance 13M et la diode 14M est raccordé à l'émetteur d'un transistor 19M dont la base est reliée à une résistance 20M et à la masse par l'intermédiaire d'un condensateur 21M, la résistance 20M étant par ailleurs connectée à la jonction entre la résistance, 15M et la diode Zener 16M.

Le collecteur du transistor 19M est connecté par une résistance 22M à la jonction entre la diode 17M et le condensateur 18M et également à une diode 23M. Celle-ci est raccordée à la base d'un autre transistor 24M dont l'émetteur est relié à la bobine 10M tandis que son collecteur est relié à une résistance 25M. Cette dernière est connectée par ailleurs, par une résistance 26M à la base d'un troisième transistor 27M dont l'émetteur est relié par une diode 28M à la jonction entre l'émetteur du transistor 24M et la bobine 10M. Celle-ci est shuntée par une diode 29M.

Le contact de travail fixe 30M du relais 9M est connecté par l'intermediaire d'une ligne 31 au contact homologue 30D du relais 9D appartenant à la section de descente 6D.

La jonction entre les résistances 25M et 26M est reliée au collecteur d'un transistor 32M dont la base est reliée à une resistance 33M. L'émetteur du transistor 32M est relié à la masse par deux diodes en série 34 et 35 tandis que l'émetteur du transistor 32D est relié directement à la masse.

La ligne 31 est connectée à un contact de sécurité thermique 36 lui-même relié à une résistance 37 de détection de courant. La borne opposée de cette résistance 37 est connectée à la borne de tension positive 4 du montage. La jonction entre le contact thermique 36 et la résistance 37 est reliée au montage en série de deux résistances 38 et 39 dont la jonction est reliée à la borne d'entrée inverseuse d'un amplificateur opérationnel 40. La borne opposée de la résistance 37 est connectée à un montage en série d'une résistance 41, d'un potentiomètre 42 et d'une autre résistance 43 branchée par ailleurs à la masse. Le curseur du potentiomètre 42 est relié à la borne d'entrée non inverseuse de l'amplificateur 40.

La sortie de cet amplificateur est reliée au point milieu d'un diviseur de tension composé de résistances 44 et 45, ce diviseur étant relié entre la masse et un point de tension positive 46 qui porte la tension régnant sur la cathode d'une diode 47 dont l'anode est reliée à la jonction entre la ligne 31 et le contact thermique 36. Cette tension positive est également appliquée à une ligne 48 reliant entre eux les collecteurs des transistors 24M et 24D.

Le point milieu du diviseur de tension composé

des résistances 44 et 45 est relié à la masse par un condensateur 49 et également à deux diodes en tête-bêche 50M et 50D dont les cathodes sont respectivement reliées aux résistances 33M et 33D.

La résistance 33M est connectée à la ligne 7D tandis que la résistance 33D est également reliée par une diode 52 à le ligne 7M.

La ligne 12M est également connectée à une résistance 53 qui est connectée par ailleurs à la base d'un transistor 54 dont l'émetteur est connecté à la masse et dont le collecteur est relié par une résistance 55 au point de tension positive 46. Ce collecteur est également connecté par une diode 56 à un contact de repos 57 qui est destiné à détecter le moment où la vitre est sur le point de s'engager dans le point de la porte en fin de course de montée.

Ce contact 57 est relié par une diode 58 à la jonction entre la base du transistor 24D et la cathode de la diode 23D. Par ailleurs, la base du transistor 54 est connectée par l'intermédiaire d'une résistance 59 à la jonction entre les résistances 25D et 26D.

Dans la section de montée 6M, on voit que la jonction entre la base du transistor 24M et la cathode de le diode 23M est reliée à la cathode d'une autre diode 60 dont l'anode est connectée à un contact de travail 61 qui est associé au contact 57 et qui, par conséquent, se ferme lorsque la vitre commence à s'engager dans son point à la fin de la montee. Ce contact 61 est relié par ailleurs à la masse par un condensateur 62 et à la cathode d'une diode 63 dont l'anode est reliée à la ligne 7M.

Enfin, une résistance 64 assure l'écretage des surtensions pouvant survenir dans la tension d'alimentation appliquée à la borne 4 et permet ainsi de protéger le montage contre cette surtension.

Le fonctionnement de ce montage est le suivant.

On va tout d'abord examiner un cycle de fonctionnement au cours duquel la vitre monte de sa position ouverte vers sa position fermée.

Lorsque l'utilisateur actionne l'inverseur 3M, le moteur 1 est immédiatement mis en marche par un circuit commençant par la borne 4 et passant par cet inverseur 3M, la ligne 7M, le relais 9M, la ligne 12M, le moteur 1, la ligne 12D, le relais 9D, la ligne 7D, l'inverseur 3D et la masse.

L'action sur l'inverseur 3M peut être brève ou prolongée. Si l'action est brève, les opérations suivantes sont réalisées. Le condensateur 18M est chargé immédiatement par l'intermédiaire de la diode 17M, tandis que le condensateur 21M se charge lentement par les résistances 15M et 20M à une tension inférieure à la tension d'alimentation. Si celle-ci est de 12 V, la tension de charge du condensateur 21M sera de 7,5 V par exemple selon une constante de temps t = (RI5M + R20M) C 21M. Cette tension ne rend le transistor 19M conducteur qu'après le temps de charge. A cela s'ajoute le seuil introduit sur l'émetteur du transistor 19M par la résistance 13M et la diode 14M. Ce seuil peut être égal à 3,3 V, si bien que le transistor ne devient conducteur que lorsque sa base atteint la tension 3,3 + 0,6 = 3,9 V. Si l'inverseur 3M revient au repos avant que ce temps soit atteint, le condensateur 18M ne peut pas se décharger à travers l'inverseur 3M à la masse grâce à la diode 17M et il se décharge donc par la résistance 22M et la diode 23M dans la base du transistor 24M, car le transistor 19M n'est pas encore conducteur.

Il en résulte que le transistor 24M est rendu conducteur un cours instant car son collecteur est à la tension positive par la diode 47 et son émetteur est connecté à la masse par la bobine 10M et l'inverseur 3M. La bobine 10M excite donc le relais 9M ce qui assure l'alimentation du moteur 1. La bobine 10M est alors auto-alimentée par le transistor 27M dont le collecteur est à la tension positive par la ligne 31, le contact 36 et la résistance 37. La base du transistor 27M étant alimentée à travers les résistances 25M et 26M et la diode 47, l'émetteur du transistor 27M est connecté à la masse par la diode 28M, la bobine 1OM et le contact inverseur 3M. En d'autres termes, le moteur est maintenu alimenté automatiquement pendant toute la course de montée de la vitre et le circuit n'assure d'autres commandes qu'à la fin du cycle de montée.

Si l'utilisateur maintient l'inverseur 3M basculé le moteur 1 est commandé directement par le circuit précité et si ce temps est supérieur au temps de charge du condensateur 21M, le transistor 19M devient conducteur et lorsque le bouton est relâché (inverseur 3M sur la position inférieure) le condensateur 18M est déchargé dans le transistor 19M, ce qui empêche toute conduction du transistor 24M et donc l'alimentation de la bobine 10M. En d'autres termes, si après la période de charge du condensateur 21M l'utilisateur relâche l'inverseur 3M, le moteur s'arrête immédiatement et tout se passe comme si le lève-vitre était commandé par un simple bouton de marche-arrêt.

En considerant de nouveau le cas dans lequel l'utilisateur actionne brievement l'inverseur 3M, on a précédemment vu que le relais 9M reste excité puisque la bobine 10M est auto-alimentée par le transistor 27M tandis que le moteur 1 est alimenté par le circuit composé de la ligne 31 du contact thermique 36 et de la résistance 37. En cas d'obstacle à la montée de la vitre, l'augmentation du courant dans la résistance 37 fait augmenter la tension aux bornes de cette résistance et il apparait une différence de potentiel aux bornes d'entrée de l'amplificateur 40 qui en provoque le basculement. Comme la sortie de cet amplificateur 40 est à collecteur ouvert, le condensateur 49 est chargé par la résistance 44 à la tension positive fournie par la diode 47 au point 46. Cette tension provoque la mise en conduction du transistor 32M par la diode 50M et du transistor 32D par la diode 52 et la résistance 33D. La conduction du transistor 32M assure le blocage du transistor 27M par la résistance

26M ce qui désexcite la bobine 1OM et arrête donc le moteur 1. Les diodes 34 et 35 sont prévues pour déterminer la tension de seuil de conduction du transistor 32M.

La mise en conduction du transistor 32D envoie sur la base du transistor 54 un ordre de blocage par la résistance 59 qui n'est validée que lorsque le même ordre (mis à la masse) arrive sur la base de ce transistor par la résistance 53 et l'inverseur 3M, lorsque la bobine de relais 1OM est désexcitée.

Le blocage du transistor 54 fait apparaître sur son collecteur une tension positive qui lui est appliquée par la résistance 55 reliée au point 46 cette tension, à travers la diode 56, le contact 57 fermé et la diode 58 provoquant la mise en conduction du transistor 24D qui alimente la bobine 10D. Il en résulte l'alimentation du moteur 1 par le basculement du relais 9D, ce qui inverse le mouvement de la vitre jusqu'à ce qu'elle soit complètement descendue, l'auto-alimentation de la bobine 1OD étant assurée par le relais 9D.

Pour les arrêts en fin de course, il convient de distinguer entre la position basse et la position haute de la vitre. A la position basse, le comparateur 40 bascule lorsque la vitre se bloque dans sa position basse, le moteur 1 ne pouvant plus entraîner davantage la vitre étant également bloquée et absorbant un courant plus élevé. Le condensateur 49 est donc chargé comme précédemment et provoque la mise en conduction du transistor 32D par la diode 50D, ce qui fait que le transistor 32D applique une tension basse au transistor 27D supprimant ainsi l'auto-alimentation de la bobine 10D et la mise au repos du relais 9D. Le moteur est donc coupé.

Au point haut, l'arrêt est réalisé de la même façon par le transistor 32M, l'ordre d'inversion transitant par le transistor 54 étant supprimé au point haut par l'interrupteur 57 qui est placé à un endroit judicieusement choisi de la course de la vitre.

Si la portière est équipée d'un joint d'un type récemment mis au point qui est relativement profond et qui enserre le bord de la vitre avec une force relativement grande, le mouvement de montée risquerait de s'arrêter dès que la vitre pénètre dans le joint. En effet, étant donné son serrage relativement fort, le joint oppose une résistance considérable au moteur 1 et ceci peut entrainer l'arrêt automatique du moteur comme précédemment décrit. Or, il est souhaitable que la vitre continue encore quelque peu son mouvement de montée pour qu'elle soit complètement pénétrée dans le joint. Il serait évidemment possible d'augmenter le seuil de réaction de l'amplificateur 40, ce qui aurait pour effet de retarder la redescente de la vitre si un obstacle se présentait entre le cadre de porte et le bord de la vitre lors de la montée. Il en résulterait évidemment une réduction de la sécurité.

Pour éviter cet inconvénient, chaque action sur l'inverseur 3M dans le sens de la montée autorise la charge du condensateur 62 à travers la diode 63.

Lorsque le panneau mobile atteint une position proche de la fermeture totale, le contact 57 annule la fonction d'inversion du mouvement par la commande en descente du moteur 1. Comme le contact 61 est mécaniquement couplé au contact 57, ce contact 61 se ferme et autorise la décharge du condensateur 62 dans la base du transistor 24M à travers la diode 60. Il en résulte l'excitation de la bobine 10M et l'inversion du relais 9M, de sorte que le moteur est alimenté pour poursuivre le mouvement de montée jusqu'à ce que le condensateur 62 soit déchargé à un point où il ne peut plus commander la conduction du transistor 24M. La constante de temps de décharge du condensateur 62 est déterminée par la valeur de ce condensateur et la résistance de jonction base-émetteur du transistor 24M, et ceci malgré le blocage du transistor 27M. Il en résulte donc que la fermeture se prolonge en fin de course de la vitre. Si au cours de l'utilisation du lève-vitre, le joint vient à devenir plus dur par suite de son vieillissement, le montage que l'on vient de décrire assure néanmoins une fermeture correcte de la vitre car le moteur 1 est commandé à sa pleine puissance dès la fermeture du contact 61.

Par ailleurs, la sécurité n'en souffre nullement puisque en tout état de cause, les contacts 57 et 61 sont prévus en fin de course de lis vitre lorsqu'il ne subsiste plus qu'une très faible fente entre le cadre de porte et le bord de la vitre.

Le circuit que l'on vient de décrire présente d'autres particularités.

Tout d'abord, les bobines 10M et 10D ne peuvent être excitées simultanément grâce aux diodes 51 et 52. En outre, ce montage assure dans tous les cas la priorité de l'action de l'inverseur 3M ou de l'inverseur 3D.

La résistance 44 associée au condensateur 49 introduit un filtrage au niveau de la détection d'une surintensité (moteur bloqué ou se voyant opposer une résistance mécanique forte) afin de ne pas provoquer l'inversion du mouvement de la vitre en cas de légère surcharge créée par les points durs mécaniques qui existent naturellement lors d'un coulissement dans les glissières à friction dans lesquelles la vitre est guidée normalement.

Le potentiomètre 42 permet d'ajuster le seuil commandant l'inversion.

La sécurité thermique 36 n'est pas nécessaire puisque en général, le moteur 1 en est lui-même pourvu. Toutefois, ce contact thermique introduit une sécurite supplémentaire.

Le montage de l'invention conduit également à des avantages sur le plan de l'anti-agression, ou si un dépôt de glace sur la vitre oppose une résistance particulière. En effet, lorsque l'ordre de montée ou de descente est donné sur l'un des inverseurs 3M et 3D, par un appui prolongé, les relais 9M et 9D ne sont pas excitées, de sorte que le moteur 1 possède sa pleine puissance, la seule chute de tension introduite dans le circuit étant celle des contacts de relais fermés au repos, cette chute étant évidemment négligeable.

Il convient également de noter que l'ordre donné par l'utilisateur est toujours prioritaire. Il est ainsi possible d'inverser le mouvement de la vitre en cours de montée automatique, soit par une impulsion, ce qui provoque une descente automatique, soit par un appui prolongé, ce qui provoque une descente manuelle avec l'arrêt au relâchement du bouton. Ceci est également possible dans le sens de la descente. De même une montée ou une descente automatique peut être arrêtée par un appui prolongé dans le sens souhaité puis relâchement de la commande.

Enfin, on notera que selon une variante, le montage peut facilement assurer une commande à deux vitesses du panneau. En effet, il suffit d'insérer entre le relais 9M et la ligne 7M, une résistance chutrice 65 (représentée en pointillés) pour qu'en cas d'appui prolongé sur l'un ou l'autre des inverseurs 3M ou 3D, le courant dans le circuit du moteur soit réduit. Par contre, en cas d'appui bref, l'inversion du relais 9D ou 9M débranche cette résistance du circuit du moteur.

## Revendications

1. Circuit de commande du moteur d'entraînement d'un panneau ouvrant de véhicule automobile, tel qu'une vitre ou le toit ouvrant comprenant des moyens (4, 7D, 7M, 9D, 9M,12D,12M, 5, 19D,, 19M, 24D, 24M) permettant d'alimenter le moteur dans les deux sens de marche à l'aide d'un sélecteur (2) à deux sections (3D, 3M) affectées respectivement à ces deux sens, des moyens (37, 40, 44, 49) générateurs d'un signal représentant en fin de course de fermeture du panneau, l'engagement de celui-ci dans un joint d'étanchéité, des moyens de commutation (32M, 27M, 10M, 9M) qui en réponse à ce signal sont capables d'arrêter le fonctionnement du moteur dans le sens de la fermeture, et des moyens (60, 61, 62, 63,24M) qui, à la suite de l'apparition dudit signal, assurent l'alimentation du moteur (1) dans ce même sens pendant une brève période de temps prédéterminée, lesdits moyens assurant le maintien de l'alimentation du moteur comprenant un circuit temporisateur (62, 24M) dont la période de temps est déclenchée dès que le panneau atteint la position dans laquelle il commence à pénétrer dans le joint, de manière à maintenir le moteur alimenté pendant ladite période de temps malgré la présence du signal provenant desdits moyens générateurs du signal d'engagement du panneau dans le joint, caractérisé en ce que la période de temps est déclenchée par un organe de commutation mécanique (61), dès que le panneau atteint la position dans laquelle il commence à pénétrer dans le joint, en ce que les moyens qui à la suite de l'apparition du signal d'engagement du panneau dans le joint d'étanchéité, inhibent les moyens (32M, 27M, 10M, 9M) d'arrêt du moteur comprennent un commutateur (61) actionné par le panneau et connecté d'une part à un condensateur (62) du circuit temporisateur, normalement chargé lorsque le moteur est alimenté et d'autre part, à un transistor (24M) du circuit temporisateur, le transistor (24M) assurant la commande sous l'action de la décharge du condensateur (62) de l'alimentation d'une bobine (10M) de relais qui fait partie des moyens de commutation (32M, 27M, 10M, 9M) et par conséquent de l'alimentation du moteur d'entraînement, et en ce que le circuit comporte de plus des moyens (15D, 15M, 20D, 20M, 21D, 21M, 19D, 19M) d'inhibition desdits moyens d'arrêt lors d'une action prolongée du sélecteur (2) exercée volontairement pour provoquer le déplacement du panneau ouvrant entre les positions extrêmes de celui-ci.

2. Circuit suivant la revendication 1, caractérisé en ce que ledit organe de commutation mécanique (61) est un contacteur ouvert au repos et fermé lorsqu'il détecte ladite position du panneau, et en ce que le transistor (24M) du circuit temporisateur constitue un composant de commande desdits moyens (4, 7D, 7M, 9D, 9M, 12D, 12M, 5, 19D, 19M, 24D, 24M) assurant l'alimentation du moteur (1) dans les deux sens de marche.

3. Circuit suivant la revendication 2, caractérisé en ce que comme connu en soi, lesdits moyens assurant l'alimentation dans les deux sens de marche du moteur comprenant des moyens (15D, 15M, 20D,20M,21D,21M,19D,19M) pour discriminer entre une action brève et une action prolongée dudit sélecteur (2).

4. Circuit suivant la revendication 3, caractérisé en ce que lesdits moyens pour discriminer entre une action brève et une action prolongée comprennent un second circuit temporisateur (20D,20M, 21D,21M) dont la période de temps est déclenchée dès le début de toute action sur ledit sélecteur (2) et qui est connecté à un circuit de commande (19D,19M,24D,24M,10D,10M,9D,9M) de l'alimentation du moteur (1) comportant un relais (9D,9M) pour chaque sens de marche, dont le contact est destiné à reprendre la fonction dudit sélecteur (2) et qui est désexcité dès que la période de temps dudit second circuit temporisateur est écoulée, ledit contact (9D,9M) assurant dans sa position de repos l'alimentation directe du moteur (1) par l'intermédiaire dudit sélecteur (2) moyennant quoi l'action brève entraîne un fonctionnement automatique du moteur jusqu'à ouverture ou fermeture complète du panneau, tan-

dis qu'une action prolongée entraîne le fonctionnement du moteur (1) dans un mode manuel.

5. Circuit suivant la revendication 4, caractérisé en ce que ledit premier circuit temporisateur (60,61,62,24M) est monté de manière à maintenir l'excitation dudit relais affecté à la montée (9M) pendant la période de temps fixée par ce premier circuit temporisateur.

6. Circuit suivant l'une quelconque des revendications 4 et 5, caractérisé en ce que comme connu en soi, une résistance chutrice (65) est montée dans le circuit d'alimentation du moteur (1) pour réduire la vitesse de celui-ci dans ledit mode manuel.

7. Circuit suivant l'une quelconque des revendications 1 6, dans lequel il est prévu des moyens (54,32D) connectés audit détecteur de courant (37,40,44,49) pour inverser le sens de marche du moteur (1) de montée en descente lorsqu'un obstacle se présente devant le panneau, à la fermeture, ces moyens comportant un contacteur (57) inhibant la fonction d'inversion lorsque le panneau atteint la position de pénétration dans le joint, caractérisé en ce que ledit contacteur d'inhibition (57) et ledit contacteur (61) de déclenchement dudit premier circuit temporisateur (62,24M) font partie d'un seul et même organe de commutation.

**Patentansprüche**

1. Steuerstromkreis für den Antriebsmotor eines zu öffnenden Wandteils eines Kraftfahrzeugs, z.B. einer Fensterscheibe oder eines Schiebedachs, mit Einrichtungen (4, 7D, 7M, 9D, 9M, 12D, 12M, 5, 19D, 19M, 24D, 24M) zur Stromspeisung des Motors für beide Antriebsrichtungen mittels eines Wählers (2) mit zwei jeweils in einer der beiden Richtungen wirkenden Abschnitten (3D, 3M), Einrichtungen (37, 40, 44, 49) zur Erzeugung eines Signals, das am Ende des Schließhubs des Wandteils dessen Eingriff in eine Abdichtung darstellt, Einrichtungen (32M, 27M, 10M, 9M), welche infolge dieses Signals den Antrieb des Motors in Schließrichtung anhalten, und Einrichtungen (60, 61, 62, 63, 24M), welche anschließend an das Auftreten dieses Signals bewirken, daß der Motor (1) während einer kurzen vorbestimmten Zeitspanne in gleicher Richtung antreibend weiter mit Strom gespeist wird, wobei die die Stromspeisung des Motors bewirkenden Einrichtungen einen Verzögerungsstromkreis (62, 24M) einschließen, dessen Zeitperiode ausgelöst wird, sobald das Wandteil die Position erreicht, in der es beginnt, in die Abdichtung einzutreten, so daß der Motor während dieser Zeitperiode trotz des Auftretens des Signals gespeist gehalten wird, das von den Einrichtungen zur Erzeugung des Signals des Eingreifens des Wandteils in die Abdichtung kommt, dadurch gekennzeichnet, daß die Zeitperiode durch ein mechanisches Umschaltorgan (61) augelöst ist, sobald das Wandteil die Position erreicht, in der es beginnt, in die Abdichtung einzutreten, daß die Einrichtungen, die anschließend an das Auftreten des Signals des Eingreifens des Wandteils in die Abdichtung die Anhalteeinrichtungen (32M, 27M, 9M, 10M) des Motors sperren, einen Umschalter (61) umfassen, der durch das Wandteil betätigt ist und einerseits an einen Kondensator (62) des Verzögerungsstromkreises, der normalerweise geladen ist, wenn der Motor gespeist ist, und andererseits an einem Transistor (24M) des Verzögerungsstromkreises angeschlossen ist, der unter der Wirkung der Entladung des Kondensator (62) die Speisung einer Relaisspule (10M), die Teil der Umschalteinrichtungen (32M, 27M, 10M, 9M) bildet, und damit die Speisung des Antriebsmotors bewirkt, und daß der Stromkreis außerdem Einrichtungen (15D, 15M, 20D, 20M, 21D, 21M, 19D, 19M) zur Sperrung der Anhalteeinrichtungen bei einer längeren Einwirkung des Wählers (2) besitzt, die absichtlich ausgeübt wird, um die Bewegung des öffnenden Wandteils zwischen seinen Einstellungen zu verursachen.

2. Stromkreis nach Anspruch 1, dadurch gekennzeichnet, daß das mechanische Umschaltelement (61) ein in Ruhestellung offener Kontakt und beim Erfassen der genannten Position des Wandteils ein geschlossener Kontakt ist, sowie dadurch, daß der Transistor des Verzögerungsstromkreises ein Steuerbauteil der Einrichtungen (4, 7D, 7M, 9D, 9M, 12D, 5, 19D, 19M, 24D, 24M) darstellt, die die Stromspeisung des Motors (1) in den beiden Betriebsrichtungen gewährleisten.

3. Stromkreis nach Anspruch 2, dadurch gekennzeichnet, daß in an sich bekannter Weise die die Stromspeisung des Motors in beiden Richtungen sicherstellenden Einrichtungen Mittel (15D, 15M, 20D, 20M, 21D, 21M, 19D, 19M) zur Unterscheidung zwischen einer kurzen und einer längeren Wirksamkeit des Wählers (2) aufweisen.

4. Stromkreis nach Anspruch 3, dadurch gekennzeichnet, daß die Mittel zur Unterscheidung zwischen einer kurzen und einer längeren Wirksamkeit einen zweiten Verzögerungsstromkreis (20D, 20M, 21D, 21M) aufweisen, dessen Zeitperiode von Anbeginn jeder Wirksamkeit des Wählers (2) ausgelöst wird und der an einen Steuerstromkreis (19D, 19M, 24D, 24M, 10D, 10M, 9D, 9M) für die Stromspeisung des Motors (1) angeschlossen ist, der ein Relais (9D, 9M) für jede Antriebsrichtung aufweist, dessen Kontakt die Wirkung des Wählers (2) wiedergibt und das nach Ablauf der Zeitperiode des zweiten Verzögerungsstromkreises entregt wird, wobei der Kontakt (9D, 9M) in seiner Ruhestellung die direkte Stromspeisung des Motors (1) über den Wähler (2) gewährleistet, wodurch die kurze Wirksamkeit einen automatischen Betrieb des Motors bis zur Öffnung oder vollständigen Schließung des Wandteiles sicherstellt, während eine länger anhaltende Wirksamkeit einen manuellen Betrieb des Motors (1) zuläßt.

5. Stromkreis nach Anspruch 4, dadurch gekennzeichnet, daß der erste Verzögerungsstromkreis (60, 61, 62, 24M) so bemessen ist, daß er die Erregung des Relais in angezogener Stellung (9M) während der durch den ersten Verzögerungsstromkreis vorgegebenen Zeitperiode aufrechterhält.

6. Stromkreis nach einem der Ansprüche 4 und 5, dadurch gekennzeichnet, daß in an sich bekannter Weise ein Abfallwiderstand (65) in den Speisestromkreis für den Motor (1) eingeschaltet ist, um die Geschwindigkeit desselben für den genannten manuellen Betrieb zu verringern.

7. Stromkreis nach einem der Ansprüche 1 bis 6, mit an den Stromdetektor (37, 40, 44, 49) angeschlossenen Mitteln (54, 32D) für die Umkehr des Betriebs des Motors (1) von aufwärts nach abwärts beziehungsweise vorwärts nach rückwärts, sobald sich dem Wandteil beim Schließen ein Hindernis entgegenstellt, wobei diese Mittel einen Kontakt (57) aufweisen, der den Umkehrbetrieb anhält, sodald das Wandteil die Position des Eindringens in die Abdichtung erreicht, dadurch gekennzeichnet, daß der Anhaltekontakt (57) und der Kontakt (61) zum Auslösen des ersten Verzögerungsstromkreises (62, 24M) Teil eines einzigen sowie desselben Umschaltelements sind.

**Claims**

1. A circuit controlling the driving motor of an openable panel of a motor vehicule, such a window glass or the openable roof comprising means (4, 7D, 7M, 9D, 9M, 12D, 12M, 5, 19D, 19M, 24D, 24M) for supplying power to the motor in both directions of operation by means of a selector (2) having two sections (3D, 3M) respectively pertaining to these two directions, means (37, 40, 44,

49) for generating a signal representing at the end of the closing travel of the panel, the engagement of the latter in a sealing element, and switching means (32M, 27M, 10M, 9M) which, in response to this signal, are capable of stopping the operation of the motor in the closing direction, and means (60, 61, 62, 63, 24M) which, upon the delivery of said signal, ensure the supply of power to the motor (1) in the same direction during a predetermined brief period of time, said means ensuring the maintenance of the supply of power to the motor comprising a timing circuit (62, 24M) whose timing period is initiated as soon as the panel reaches the position in which it starts to penetrate the sealing element, so as to maintain the motor supply during said timing period notwithstanding the presence of the signal coming from said means generating the signal of engagement of the panel in the sealing element, characterized in that the timing period is initiated by a mechanical switching element (61) as soon as the panel reaches the position in which it starts to penetrate the sealing element, the means which, upon the delivery of the signal of engagement of the panel in the sealing element inhibit the means (32M, 27M, 10M, 9M) for stopping the motor comprise a switch (61) actuated by the panel and connected on one hand to a capacitor (62) of the timing circuit, which is normally charged when the motor is supplied with power and on the other hand, to a transistor (24M) of the timing circuit, the transistor (24M) controlling, under the action of the discharge of the capacitor (62), the supply of power to a relay coil (10M) which is part of the switching means (32M, 27M, 10M, 9M) and consequently the supply of power to the driving motor, and the circuit further comprises means (15D, 15M, 20D, 20M, 21D, 21M, 19D, 19M) for inhibiting said stopping means upon a prolonged action of the selector (2) exerted deliberately to cause the displacement of the openable panel between the end positions of the latter.

2. Circuit according to claim 1, characterized in that said mechanical switching element (61) is a contact which is open at rest and closed when it detects said position of the panel, and the transistor (24M) of the timing circuit constitutes a component controlling said means (4, 7D, 7M, 9D, 9M, 12D, 12M, 5, 19D, 19M, 24D, 24M) for supplying power to the motor (1) in both directions of operation.

3. Circuit according to claim 2, characterized in that, in the known manner, said means for supplying power in both directions of operation of the motor comprise means (15D, 15M, 20D, 20M, 21D, 21M, 19D, 19M) for discriminating between a brief action and a prolonged action of said selector (2).

4. Circuit according to claim 3, characterized in that said means for discriminating between a brief action and a prolonged action comprise a second timing circuit (20D, 20M, 21D, 21M) the timing period of which is initiated right at the start of any action on said selector (2) and which is connected to a control circuit (19D, 19M, 24D, 24M, 10D, 10M, 9D, 9M) controlling the supply of power to the motor (1) comprising a relay (9D, 9M) for each direction of operation, the contact of which is adapted to resume the function of said selector (2) and which is de-excited as soon as the timing period of said second timing circuit has elapsed, said contact (9D, 9M) ensuring in its position of rest the direct supply of power to the motor (1) through said selector (2), whereby the brief action results in an automatic operation of the motor up to the complete opening or closure of the panel, whereas a prolonged action results in the operation of the motor (1) in a manual mode.

5. Circuit according to claim 4, characterised in that said first timing circuit (60, 61, 62, 24M) is so connected as to maintain the excitation of said relay pertaining to the raising (9M) during the timing period determined by this first timing circuit.

6. Circuit according to claim 4 or 5, characterized in that, in the known manner, a voltage-reducing resistor (65) is connected in the circuit supplying power to the motor (1) so as to reduce the speed of the latter in said manual mode.

7. Circuit according to any one of the claims 1 to 6, in which means (54, 32D) are provided which are connected to said current detector (37, 40, 44, 49) for reversing the direction of operation of the motor (1) from raising to lowering when an obstacle is present in front of the panel when closing the latter, these means comprising a switch (57) inhibiting the reversing function when the panel reaches the position in which it penetrates the sealing element, characterized in that said inhibition switch (57) and said switch (61) initiating said first timing circuit (62, 24M) are part of one and the same switching element.